# EUROPÄISCHE PATENTSCHRIFT

(11) **EP 0 652 327 B1**
(45) Veröffentlichungstag und Bekanntmachung des Hinweises auf die Patenterteilung: **11.04.2001**
(21) Anmeldenummer: 94115088.0
(22) Anmeldetag: 24.09.1994
(51) Int. Cl.: E03B 3/02

(54) **Abzweigelement zum Einsetzen in das Fallrohr einer Dachrinne**
Branching element for installing in a downpipe of a roof gutter
Elément de branchement pour l'insertion dans une conduite de descente d'eau de gouttières

(30) Priorität: 05.11.1993 DE 9316938 U
(43) Veröffentlichungstag der Anmeldung: 10.05.1995
(73) Patentinhaber: Schneider, Fritz, 34305 Niedenstein (DE)
(72) Erfinder: Schneider, Fritz, 34305 Niedenstein (DE)
(74) Vertreter: WALTHER, WALTHER & HINZ Patentanwälte

(56) Entgegenhaltungen:
- DE-A- 2 747 008
- DE-A- 2 842 889
- DE-A- 3 105 744
- GB-A- 1 573 321
- GB-A- 2 230 071

## Beschreibung

Die Erfindung betrifft ein Abzweigelement zum Einsatz in das Fallrohr einer Dachrinne, umfassend ein die Fallrohrenden erfassendes Zwischenglied, wobei der Mantel des Zwischengliedes eine Öffnung mit einem Stutzen aufweist, der in eine in der Wandung eines Regenwassersammlers angebrachte Offnung hineinrag en kann, wobei das Zwischenglied eine Zunge zum Ableiten des Wassers in den Stutzen besitzt.

Aus der GB-A-1 573 321 ist ein Abzweigelement für ein Fallrohr bekannt, bei der Zunge nicht bis in den Stutzen hineinragt, sondern nur bis an den Stutzen heran, so dass bei geringen Wassermengen hier die Gefahr besteht, dass das Wasser aufgrund seiner Adhäsionskraft, ähnlich wie bei der Auslasstülle einer Kaffeekanne um die Zunge herum wandert und dann in das Fallrohr gelangt. Bei großen Wassermengen besteht aufgrund der Anordnung der Zunge die Gefahr, dass der Regenwassersammlerüberläuft.

In der DE-A-28 42 889 ist ein Abzweigelement für Regenwasser zum Einbau in ein Fallrohr einer Dachrinne beschrieben, bei dem die dort dargestellte Zunge keinerlei Öffnung aufweist, und dass ebenfalls im eigentlichen Sinn kein Stutzen vorhanden ist. Vielmehr ist hierbei vorgesehen, dass von der Zunge das Wasser unmittelbar dem Behälter zugeführt wird. Der unmittelbare Anschluss eines Behälters an das Fallrohr der Regenrinne ist bei einem normalen Regenwassersammler nicht möglich, da aufgrund von Temperaturausdehnungen eine vernünftige Verbindung nicht möglich ist.

Aus der DE-A-27 47 008 ist eine Art "Dom" im Bereich des Abzweigelementes angeordnet, wobei sich eine gewisse Menge des Wassers, und zwar bis zur unteren Kante der Öffnung aufstauen wird. Der freie Rückfluss des Wassers über diese Kante hinaus ist jedoch nicht möglich, da bei in das Fallrohr einströmenden Wassermengen, wie es beispielsweise bei einem Wolkenbruch der Fall ist, die Kraft des zuströmenden Wassers größer sein wird, als der Druck der Wassersäule, die im Behälter steht, und die höher ist als die untere Kante der Öffnung in dem Dom. Das heißt auch hier besteht die Gefahr, dass bei großen Niederschlagsmengen der Regenwassersammler überläuft.

Aus der GB-A-2 230 071 ist ein Abzweigelement der oben beschriebenen Art bekannt, wobei die Zunge allerdings nicht in den Stutzen hineinragt, sondern nur bis an die innere Wandung des die Zunge aufnehmenden Zwischengliedes. Die Folge hiervon ist, dass, wenn nur ein geringer Wasserfluss durch die Regenrinne erfolgt, kein Wasser bis in den Sammelbehälter gelangt. Der Grund hierfür liegt darin, dass bei wenig Wasser das Wasser zwar auf der schrägstehenden Zunge entlang bis an die Spitze gleiten wird, jedoch dort aufgrund der Adhäsionskräfte um die Kante herumlaufen wird, und dann, wie bereits zuvor beschrieben, ähnlich wie bei der Ausgießtülle einer Kaffeekanne, nach unten in das Fallrohr läuft. Bei starken Regengüssen wird selbstverständlich das ankommende Wasser durch die Schrägstellung der Zunge in den Stutzen geleitet; jedoch besteht bei starken Regenfällen die Gefahr, dass bei bereits relativ vollem Behälter der Behälter überläuft. Der Schwung des ankommenden Wassers ist bei starken Regenfällen so groß, dass er aufgrund seines Druckes verhindert, dass überschüssiges Wasser aus dem Behälter durch den Stutzen hindurch in das Fallrohr zurücklaufen kann; der Sammelbehälter läuft demzufolge über. Zusammenfassend bedeutet dies, dass die Vorrichtung gemäß der GB-A-2230 071 aus zweierlei Gründen nicht funktionstüchtig ist:
1. Bei geringen Niederschlagsmengen findet eine Befüllung des Behälters kaum oder gar nicht statt.
2. Bei hohen Niederschlagsmengen besteht - wie bereits oben ausgeführt - die Gefahr, dass der Behälter überläuft. Das heißt, ein solcher Behälter kann nicht in Hauswandnähe aufgestellt werden, da ansonsten die Hauswand auf Dauer Feuchtigkeitsschäden aufweisen wird.

Der Erfindung liegt daher die Aufgabe zugrunde, eine Vorrichtung der eingangs genannten Art derart weiterzubilden, dass hiermit zum einen gewährleistet ist, dass auch geringe Wassermengen in den Behälter abgeleitet werden können, und zum anderen selbst bei wolkenbruchartigen Niederschlägen verhindert wird, dass der Behälter überläuft.

Die Aufgabe wird erfindungsgemäß dadurch gelöst, dass die Zunge durch die Öffnung im Mantel des Zwischengliedes in den Stutzen hineinragt, und im Bereich des Zwischengliedes an der Wandung des Zwischengliedes anschließt, wobei unterhalb der Zunge ein Abstand zur Innenwandung des Stutzen vorgesehen ist, wobei die Zunge im Bereich des Zwischengliedes eine Öffnung aufweist, wobei der Bereich um die Öffnung vertieft schalenförmig ausgebildet ist.

Durch den Abstand unterhalb der Zunge zur Innenwandung des Stutzens in Verbindung mit der Tatsache, dass die Zunge bis in den Stutzen hineinragt, wird erreicht, dass beispielsweise bei einem Wolkenbruch das Wasser auf der Zunge mit hoher Energie in den Behälter hineinschießt, und daher oberhalb der Zunge das im Behälter befindliche Wasser auch keine Chance hat, in den Stutzen zurückzuströmen, jedoch unterhalb der Zunge das Wasser problemlos in den Stutzen und damit in das Fallrohr zurückströmen kann, wenn der Wasserspiegel in dem Regenwassersammler eine bestimmte Höhe erreicht hat. Das heißt, es besteht hierbei keine Gefahr, dass der Regenwassersammler überläuft. Darüber hinaus ist nicht zu verkennen, dass durch die Öffnung in der Zunge bei derartigen Wolkenbrüchen ein Großteil des Wassers unmittelbar weiter in das Fallrohr geleitet wird, ohne dass es den Umweg über den Regenwassersammler nehmen muss. Somit ist in zweierlei Hinsicht sichergestellt, dass es zu einem Überlaufen des Regenwassersammlers nicht kommen kann; nämlich zum einen durch die Öffnung in der Zunge, und zum anderen durch die Anordnung der Zunge im Stutzen.

Darüber hinaus ist allerdings gewährleistet, dass bei geringen Wassermengen das ankommende Wasser vollständig dem Regenwassersammler zugeführt werden kann. Bei geringen Wassermengen ist es nämlich so, dass das Wasser aufgrund der Oberflächenspannung an der Innenwandung des Fallrohres entlangfließt: Gelangt es dann auf die Zunge, wird es unmittelbar in den Regenwassersammler geleitet, weil die Zunge weit in den Stutzen hineinragt und weil durch die Öffnung in der Zunge mit der schalenförmigen Vertiefung um die Öffnung herum das ankommende Wasser nicht durch die Öffnung in das Fallrohr gelangen kann, sondern vielmehr - wie bereits ausgeführt - in den Regenwassersammler gelangt.

Weitere vorteilhafte Merkmale ergeben sich aus den Unteransprüchen.

Anhand der Zeichnungen wird die Erfindung nachstehend beispielhaft näher erläutert:
- Fig. 1: zeigt das Abzweigelement in einer Seitenansicht;
- Fig. 2: zeigt einen Schnitt aus Fig. 1.

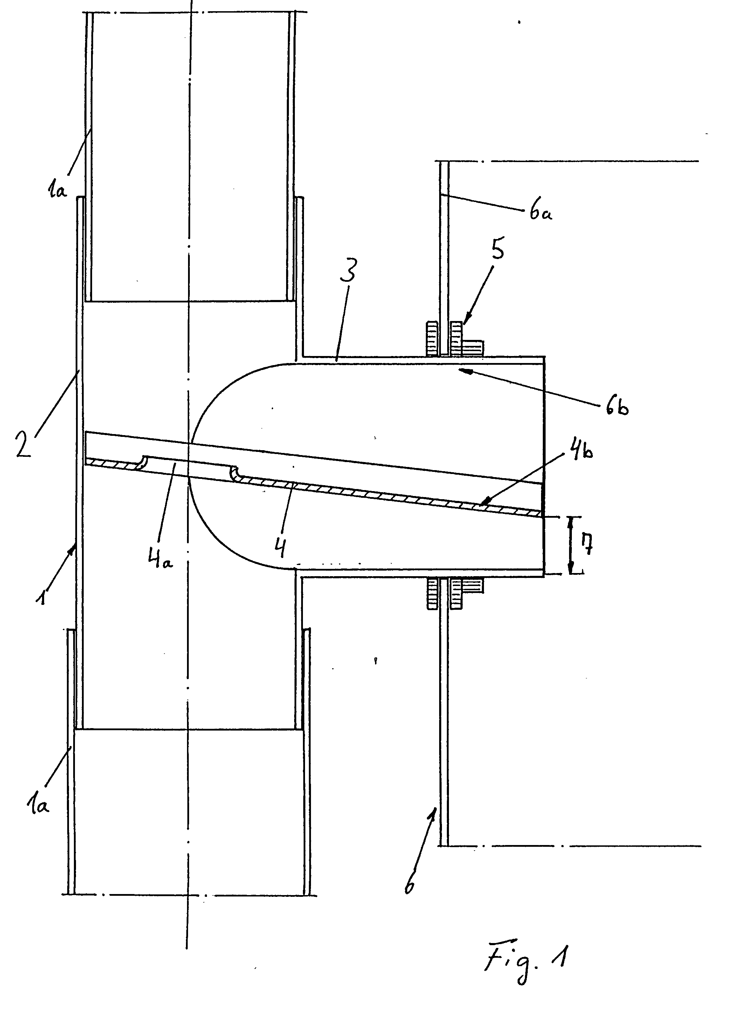

Gemäß Fig. 1 besteht das insgesamt mit 1 bezeichnete, in dem Fallrohr 1a, Abzweigelement aus dem Zwischenglied mit dem Stutzen 3, sowie die den Stutzen 3 durchragende Zunge 4. Der Stutzen 3 besitzt die Flanschverbindung 5, mit dessen Hilfe der Stutzen 3 mit der Öffnung 6b in der Wandung 6a des Regenwassersammlers 6 verbunden ist.

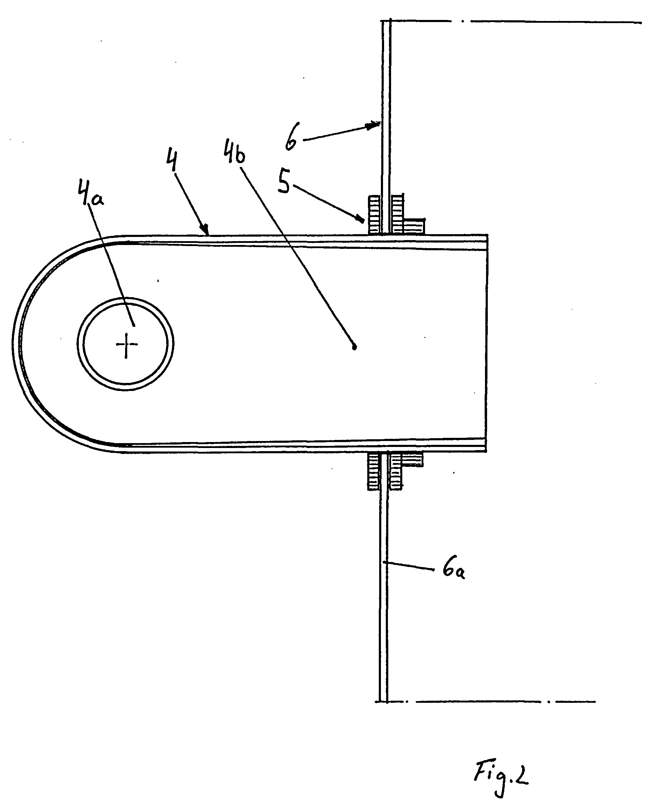

Konzentrisch zu dem Fallrohr 1a befindet sich die Öffnung 4a der Zunge 4 (Fig. 2). Die Öffnung 4a in der Zunge 4 gegenüber dem die Öffnung 4a umgebenden Zungenmaterial ist erhöht ausgebildet, so daß sich eine vertiefte schalenförmige Ausbildung für den Bereich um die Öffnung 4a ergibt. Ebenfalls schalenförmig ausgebildet ist der weitere Verlauf der durch den Stutzen in den Sammler ragende Teil 4b der Zunge. Unterhalb der Zunge 4 befindet sich der Abstand 7, durch den das überschüssige Wasser aus dem Sammler 6 in das Fallrohr 1a zurückläuft.

## Patentansprüche

1. Abzweigelement (1) zum Einsatz in das Fallrohr (1a) einer Dachrinne, umfassend ein die Fallrohrenden erfassendes Zwischenglied, wobei der Mantel des Zwischengliedes eine Öffnung mit einem Stutzen (3) aufweist, der in eine in der Wandung eines Regenwassersammlers (6) angebrachte Öffnung (6b) hineinrag en kann, wobei das Zwischenglied eine Zunge (4) zum Ableiten des Wassers in den Stutzen (3) besitzt,
**dadurch gekennzeichnet,**
dass die Zunge (4) durch die Öffnung im Mantel des Zwischengliedes (2) in den Stutzen (3) hineinragt und im Bereich des Zwischengliedes an die Wandung des Zwischengliedes anschließt, wobei unterhalb der Zunge (4) ein Abstand (7) zur Innenwandung des Stutzens (3) vorgesehen ist, wobei die Zunge (4) im Bereich des Zwischengliedes eine Öffnung (4a) aufweist, wobei der Bereich um die Öffnung (4a) vertieft schalenförmig ausgebildet ist.

2. Abzweigelement nach Anspruch 1,
**dadurch gekennzeichnet,**
daß der Stutzen (3) an der Wandung (6a) eines Regenwassersammlers (6) verschraubbar ist.

3. Abzweigelement nach Anspruch 1,
**dadurch gekennzeichnet,**
daß die Öffnung (4a) der Zunge (4) konzentrisch zum Fallrohr (1a) angeordnet ist.

## Claims

1. Branch piece (1) for insertion in the downspout (1a) of a roof drain, including an intermediate member locking the ends of the downspout, whereas the sleeve of the intermediate member has an opening with a connection piece (3) which is capable of projecting into an opening (6b) provided in the wall of a cistern (6), whereas the intermediate member has a spout (4) for draining the water into the connection piece (3),
**characterized in that** the spout (4) projects through the opening provided in the sleeve of the intermediate member (2) into the connection piece (3) and is contiguous to the wall of the intermediate member in the area of said intermediate member, whereas a space (7) is provided underneath the spout (4) toward the inner wall of the connection piece (3), the spout (4) being provided in the area of the intermediate member with an opening (4a), whereas the area around the opening (4a) has been given the shape of a deep saucer.

2. Branch piece according to claim 1,
**characterized in that** the connection piece (3) is screwable onto the wall (6a) of a cistern (6).

3. Branch piece according to claim 1,
**characterized in that** the opening (4a) of the spout (4) is arranged in a concentric position relative to the downspout (1a).

## Revendications

1. Elément de branchement (1) à insérer dans le tuyau de descente pluviale (1a) d'une gouttière, comprenant un membre intermédiaire saisissant les extrémités du tuyau de descente pluviale, le revêtement du membre intermédiaire étant pourvu d'une ouverture avec un raccord (3) qui peut s'introduire dans une ouverture (6b) ménagée dans la paroi d'un réservoir d'eau pluviale (6), ledit membre intermédiaire étant muni d'une goulotte (4) destinée à l'écoulement de l'eau dans le raccord (3),
**caractérisé en ce que** la goulotte (4) traverse l'ouverture dans le revêtement du membre intermédiaire (2) et pénètre dans le raccord (3) et qu'elle est contiguë à la paroi du membre intermédiaire dans la zone du membre intermédiaire, un espace (7) étant ménagé en-dessous de la goulotte (4) jusqu'à la paroi intérieure du raccord (3), la goulotte (4) étant pourvue dans la région du membre intermédiaire d'une ouverture (4a), la zone autour de l'ouverture (4a) ayant la forme d'une profonde cuvette.

2. Elément de branchement selon la revendication 1,
**caractérisé en ce que** le raccord (3) peut être vissé à la paroi (6a) d'un réservoir d'eau pluviale (6).

3. Elément de branchement selon la revendication 1,
**caractérisé en ce que** l'ouverture (4a) de la goulotte (4) est disposée de manière concentrique par rapport au tuyau de descente pluviale (1a).
